# EUROPÄISCHE PATENTSCHRIFT

(11) **EP 2 418 716 B1**
(45) Veröffentlichungstag und Bekanntmachung des Hinweises auf die Patenterteilung: **27.05.2015**
(21) Anmeldenummer: 11006529.9
(22) Anmeldetag: 09.08.2011
(51) Int. Cl.: H01M 2/20, H01M 2/30, H01M 10/04, H01M 10/6553, H01M 10/6555, H01M 2/02, H01M 10/613, H01M 10/615, H01M 10/647, H01M 10/6557

(54) **Akkupack mit Temperierelementen**
Battery pack with tempering elements
Batterie avec des éléments de thermorégulation

(30) Priorität: 09.08.2010 DE 102010033791
(43) Veröffentlichungstag der Anmeldung: 15.02.2012
(73) Patentinhaber: ads-tec GmbH, 72622 Nürtingen (DE)
(72) Erfinder: Speidel, Thomas, 71706 Markgröningen (DE)
(74) Vertreter: Wasmuth, Rolf

(56) Entgegenhaltungen:
- WO-A1-2007/063877
- DE-A1-102007 063 179
- DE-A1-102008 034 860
- US-A1- 2009 208 828

## Beschreibung

Die Erfindung betrifft einen Akkupack, bestehend aus einer Mehrzahl einzelner Akkuzellen, insbesondere Akkuflachzellen nach dem Oberbegriff des Anspruchs 1.

Zur Bereitstellung größerer Leistungen z. B. für Elektrofahrzeuge ist es bekannt, eine Vielzahl von Akkublocks zu einer größeren Einheit zusammenzuschalten. Zur Erzielung einer ausreichend hohen Ausgangsspannung werden die Akkuzellen eines Akkublocks elektrisch in Reihe geschaltet, wozu wechselweise die Anoden- und Kathodenableiter benachbarter Akkuzellen miteinander zu verbinden sind. Dabei muss gewährleistet sein, dass die elektrischen Verbindungen hochstromfest sind, da bei Verwendung in Kraftfahrzeugen hohe Spitzenströme auftreten können.

In jeder Akkuzelle fällt sowohl bei der Stromabgabe als auch bei der Stromaufnahme Verlustwärme an, die zu einer erhöhten Temperatur des gesamten Akkublocks führen kann. Um Schädigungen der Akkuzelle und/oder des Akkublocks zu vermeiden, muss einerseits Verlustwärme sicher abgeführt werden und andererseits bei zu niedrigen Außentemperaturen eine Temperierung des Akkupacks möglich sein, was insbesondere bei chemisch auf Lithium basierenden Zellen von Vorteil ist.

Aus der WO 2007/063877 A1 geht ein Hohlprofil als bekannt hervor, auf dem die elektrisch das Hohlprofil kontaktierten Ableiter durch Schweißverbindung festgelegt sind. Die Anlage der Ableiter an dem Hohlprofil ist ausschließlich durch die Schweißung bestimmt.

Die DE 10 2008 034860 A1 offenbart eine Wärmeleitplatte, die den oberen Rand der Akkuflachzelle zwischen zwei Ableitern übergreift. Wie die Ableiter elektrisch miteinander zu kontaktieren sind, ist der Druckschrift nicht zu entnehmen.

Zur Abführung anfallender Wärme ist in der DE 10 2007 063179 A1 vorgeschlagen, zwischen Akkuflachzellen jeweils Wärme leitende Zwischenwände anzuordnen, die jeweils an eine gekühlte Wärmeleitplatte anschließen.

Die US 2009/208828 A1 offenbart, zur Ableitung von Wärme im Fußbereich eines Ableiters flüssigkeitsgekühlte Kanäle vorzusehen.

Der Erfindung liegt die Aufgabe zugrunde, in einem Akkupack aus einer Mehrzahl einzelner Akkuzellen einerseits eine hochstromfeste elektrische Verbindung zu gewährleisten und andererseits eine sichere Abfuhr anfallender Verlustwärme zu ermöglichen.

Die Aufgabe wird erfindungsgemäß nach den kennzeichnenden Merkmalen des Anspruchs 1 gelöst.

Durch die Aufteilung des Ableiters in einen ersten, wärmeübetragenden Flächenabschnitt und einen zweiten, elektrischen Kontaktabschnitt ist die Möglichkeit gegeben, den Bereich des wärmeübertragenden Flächenabschnitts optimal für eine Wärmeübertragung auszubilden und den elektrischen Kontaktabschnitt optimal für eine hochstromfeste elektrische Verbindung auszubilden. Dadurch kann in beiden Bereichen eine Optimierung erzielt werden, ohne dass Kompromisse eingegangen werden müssen. Über ein Druckstück wird der wärmeübetragende Flächenabschnitt des Ableiters in wärmeübertragender Verbindung an das Temperierelement angedrückt und der Kontaktabschnitt des einen Ableiters mit dem Kontaktabschnitt des anderen Ableites elektrisch verbunden.

Der wärmeübertragende Flächenabschnitt und der elektrische Kontaktabschnitt liegen längs einer Knicklinie zueinander abgewinkelt, wobei sich die Knicklinie in Längsrichtung des Temperierelementes erstreckt.

In einer ersten Ausführungsform können die Kontaktabschnitte der an einem Temperierelement anliegenden Ableiter über das elektrisch leitende Temperierelement als Kontaktbrücke elektrisch miteinander verbunden werden. Dazu wird jeder elektrische Kontaktabschnitt eines Ableiters auf einer zugeordneten Kontaktfläche des jeweiligen Temperierelementes mechanisch befestigt.

In einer anderen Ausführungsform der Erfindung sind die Kontaktabschnitte der einem Temperierelement zugeordneten Ableiter mechanisch aneinander befestigt, so dass eine elektrische Verbindung unmittelbar von Ableiter zu Ableiter erfolgt. Hierzu überlappen sich die Kontaktabschnitte der Ableiter, wobei sie im Überlappungsbereich mechanisch fest miteinander verbunden werden.

Sowohl bei der ersten Ausführungsform der Erfindung als auch bei der zweiten Ausführungsform kann die mechanische Befestigung durch eine stoffschlüssige Verbindung hergestellt werden. Diese stoffschlüssige Verbindung wird bevorzugt durch Laserlöten hergestellt, wobei ein Laser das zwischen den überlappenden Ableitern eingebrachte Lot verflüssigt. Nach dem Erkalten ist die Festigkeit der miteinander verbundenen Kontaktabschnitte der Ableiter durch Diffusion und Adhäsion des Lotes mit dem Material der Ableiter erzielt.

In einer anderen Ausführungsform der stoffschlüssigen Verbindung kann eine Schweißverbindung angewendet werden, wobei als Schweißverfahren Ultraschallschweißen, Reibschweißen, Rührreibschweißen oder Laserschweißen eingesetzt werden kann. Eine Schweißnaht verläuft dabei bevorzugt über im Wesentlichen die gesamte Breite des Kontaktabschnitts des Ableiters in Längsrichtung des Temperierelementes.

Die elektrische Kontaktfläche eines Temperierelementes zum Festlegen eines Kontaktabschnittes eines anliegenden Ableiters verläuft bevorzugt unter einen Winkel von 30° bis 60° zur Längsmittelebene des Temperierelementes, insbesondere unter einem Winkel von 45°. Ein derartiger Winkel ermöglicht die Anwendung von automatisierten Schweißmaschinen, da der Winkel einen ausreichenden Freiraum für ein Schweißrad oder eine Sonotrode bereitstellt.

Bevorzugt ist im Bereich der wärmeübertragenden Verbindung zwischen dem Temperierelement und dem Ableiter eine Wärmeleitpaste eingebracht, um den Wärmeübergangswiderstand zu senken.

Zweckmäßig ist an dem Druckstück, welches zum Anpressen der wärmeübetragenden Flächenabschnitte an das Temperierelement dient, eine Abbiegekante ausgebildet, so dass bei der Montage des Anschlussbereiches der im Anlieferungszustand ebene Ableiter durch Einwirken des Druckstücks in einen wärmeübertragenden Flächenabschnitt und einem elektrischen Kontaktabschnitt abgewinkelt wird. Das Druckstück überdeckt dabei vorteilhaft die Knicklinien des Ableiters.

Das Temperierelement besteht bevorzugt aus Aluminium, wobei es als Profilkörper ausgebildet sein kann. Zweckmäßig ist der Profilkörper ein Strangprofil.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: eine perspektivische Ansicht eines Akkublocks,
- Fig. 2: einen schematischen Längsschnitt durch den Akkublock nach Fig. 1,
- Fig. 3: eine schematische, perspektivische Teilansicht auf einen im Akkublock angeordneten Akkupack,
- Fig. 4: einen schematischen Schnitt durch den Kontaktbereich längs der Linie IV-IV in Fig. 3,
- Fig. 5: eine schematische, perspektivische Ansicht auf eine Bodenplatte als Halter von Temperierelementen,
- Fig. 6: eine schematische Darstellung zur Montage der Temperierelemente,
- Fig. 7: in vergrößerter Darstellung die Einzelheit VII in Fig. 6,
- Fig. 8: in schematischer Darstellung einen Kontaktbereich gemäß Fig. 3 mit einem angeordneten Schweißgerät zum Befestigen von Kontaktabschnitten auf dem Temperierelement,
- Fig. 9: in schematischer Darstellung einen Akkupack gemäß Fig. 3 mit modifiziertem Anschlussbereich für die Ableiter,
- Fig. 10: einen Schnitt durch den Anschlussbereich längs der Linie X-X in Fig. 9,
- Fig. 11: in schematischer Darstellung den Anschlussbereich vor der Montage der Temperierelemente und der Anordnung des Druckstücks,
- Fig. 12: in vergrößerter Darstellung die Einzelheit XII in Fig. 11.

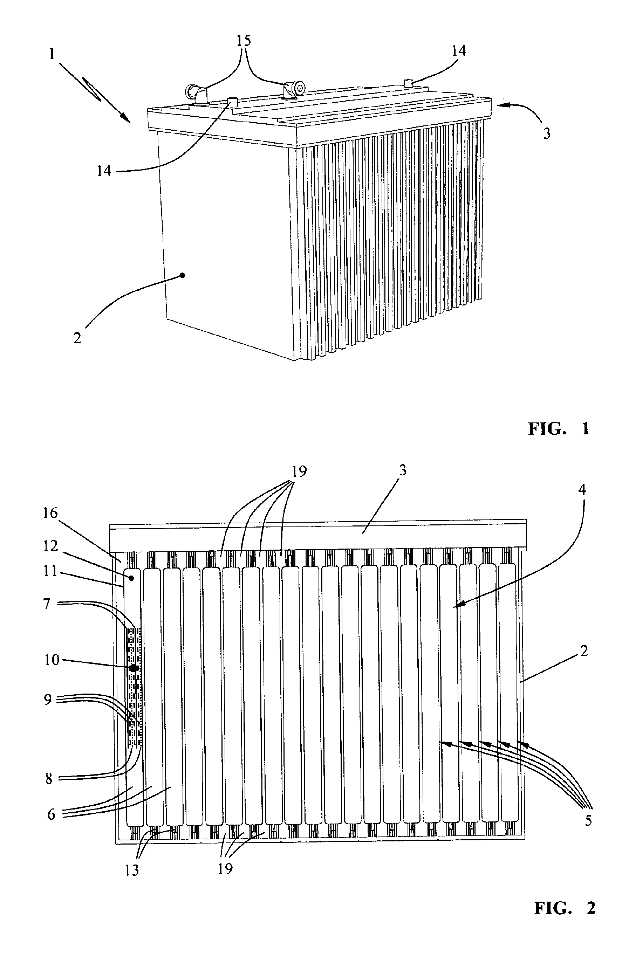

In Fig. 1 ist ein Akkublock 1 dargestellt, der ein Gehäuse 2 und einen das Gehäuse 2 verschließenden Deckel 3 aufweist. Wie sich aus dem Schnitt nach Fig. 2 ergibt, ist im Gehäuse 2 ein Akkupack 4 aus einer Vielzahl von Einzelzellen 5 angeordnet, die relativ zueinander mechanisch gehalten sind. Im gezeigten Ausführungsbeispiel ist die Einzelzelle 5 als Akkuflachzelle 6 aufgebaut, auch Pouchzelle genannt, die vorzugsweise chemisch auf Lithium basiert. Die Erfindung ist auch mit Zellen 5 anderer chemischer Struktur anwendbar, z. B. Nickel-Kadmium Zellen, Nickel-Metallhydrid Zellen oder dgl..

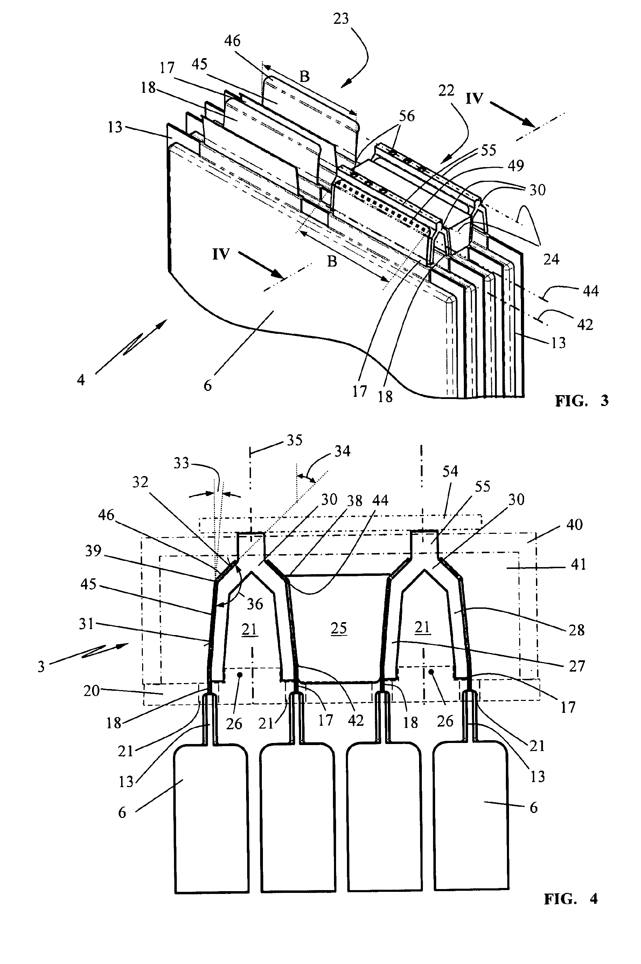

Wie in Fig. 2 an der linken Akkuflachzelle 6 schematisch dargestellt, besteht diese aus einer Vielzahl von aufeinandergeschichteten Kathodenfolien 7 und Anodenfolien 8, die jeweils durch dazwischen angeordnete Separatorfolien 9 voneinander getrennt sind. Die Kathodenfolien 7 sind mit einem Kathodenableiter 17 (Fig. 3) und die Anodenfolien 8 mit einem Anodenableiter 18 (Fig. 3) verbunden. Das so gebildete Folienpaket 10 ist in eine Gehäusefolie 11 eingeschlagen, welche ein Foliengehäuse 12 (Pouchzelle) bildet. Das Foliengehäuse 12 ist umlaufend dicht verschlossen, z. B. durch eine umlaufende Siegelnaht 13. Im Foliengehäuse 12 ist eine Elektrolytlösung eingefüllt. Die beispielhaft dargestellten Akkuflachzellen sind Lithium-Ionen Zellen.

Die meist aus einer Kupferfolie bestehende Anodenfolie 8 ist innerhalb des Foliengehäuses 12 mit dem Anodenableiter 18 verbunden, der durch die Siegelnaht 13 nach außen geführt ist (Fig. 3). Entsprechend ist die vorzugsweise aus einer Aluminiumfolie bestehende Kathodenfolie 7 im Foliengehäuse 12 mit dem Kathodenableiter 17 elektrisch leitend verbunden, der ebenfalls durch die Siegelnaht 13 nach außen geführt ist (Fig. 3).

Das Gehäuse 2 des Akkublocks 1 ist durch den Deckel 3 vorzugsweise gas- und flüssigkeitsdicht verschlossen, wobei im Deckel 3 die elektrischen Anschlusspole 14 des Akkublocks 1 nach außen geführt sind.

Am Deckel 3 sind ferner Anschlüsse 15 vorgesehen, über die der Akkublock 1 an ein strömendes Wärmeträgermedium angeschlossen ist, z. B. ein Gas oder eine Flüssigkeit. Über das Wärmeträgermedium wird Verlustwärme aus dem Akkublock 1 abgeführt oder bei zu niedrigen Umgebungstemperaturen dem Akkublock 1 Wärme zugeführt.

Der Innenraum 16 des Akkugehäuses 2 ist aufgrund der mechanisch im Gehäuse 2 gehaltenen Akkuflachzellen 6 in eine Vielzahl von Hohlräumen 19 aufgeteilt. Zweckmäßig ist vorgesehen, dass die Hohlräume 19 des Innenraums 16 und bevorzugt auch im Deckel 3 bestehende Hohlräume untereinander in unmittelbarer oder mittelbarer Strömungsverbindung stehen. Zur mechanischen Sicherung der Akkuflachzellen 6 im Gehäuse 2 kann ein unter Druck stehendes Gas, zweckmäßig ein Inertgas in das Gehäuse 2 eingefüllt sein.

Der Deckel 3 besteht im Ausführungsbeispiel aus einer Bodenplatte 20, die eine Oberschale 40 verschließt. In den so gebildeten Innenraum 41 ragen die Ableiter 17 und 18 durch Schlitze 21 in der Bodenplatte 20 herein. Zweckmäßig liegen Teilabschnitte der Siegelnaht 13 in den Schlitzen 21.

Zwischen je zwei elektrisch miteinander zu verbindenden Ableitern 17 und 18 ist ein Temperierelement 30 als Abstandshalter eingesetzt. Dabei liegen mehrere Temperierelemente 30 mit ihren Längsachsen 24 zueinander parallel und bilden mit den ersten Ableitern eine Reihe 22; die zweiten Ableiter einer Akkuflachzelle 6 bilden mit zugeordneten Temperierelementen eine parallele Reihe 23. Wie Fig. 4 zeigt, stehen die als offene Längsprofile ausgebildeten Temperierelemente 30 auf der Bodenplatte 20 auf, wobei ein Steg 26 der Bodenplatte in das Profil einragt und dessen Seitenwände 27 und 28 gegen durch ein Druckstück 25 aufgebrachte Druckkräfte sicher abstützt. Zweckmäßig greift der Steg 26 in das offene Profil des Temperierelementes 30 dichtend ein, so dass im Temperierelement 30 ein Längskanalabschnitt 21 ausgebildet ist, der von einem Wärmeträgermedium wie Gas oder Flüssigkeit durchströmt werden kann. Mittels des Wärmeträgermediums kann Wärme abgeführt und bei ungünstigen Umgebungstemperaturen Wärme zugeführt werden. Zu diesem Zweck kann das Temperierelement 30 auch als geschlossenes Profil ausgebildet sein, z.B. als rohrförmiges Profil mit rundem, dreieckigem, rechteckigem oder anderem geeigneten Querschnitt.

Zur Montage des Anschlussbereichs gemäß Fig. 4 durchragen die im Anlieferungszustand eben und gerade verlaufenden Ableiter 17 und 18 die Schlitze 21 in der Bodenplatte 20. Zwischen je zwei an ein Temperierelement 30 anzulegende Ableiter 17 und 18 wird das Temperierelement 30 eingeschoben bis dieses mit den freien Enden der Seitenwände 27 und 28 auf der Bodenplatte 20 aufsteht und der Steg 26 den Profilkörper abstützt bzw. abdichtet. Zwischen je zwei auf der Bodenplatte 20 in einer Reihe 22 bzw. 23 aufeinanderfolgenden Temperierelementen 30 wird das Druckstück 25 eingesetzt. Das Druckstück 25 drückt mit seiner Druckfläche 23 den jeweiligen Ableiter 17 und 18 an das jeweilige Temperierelement 30 fest an.

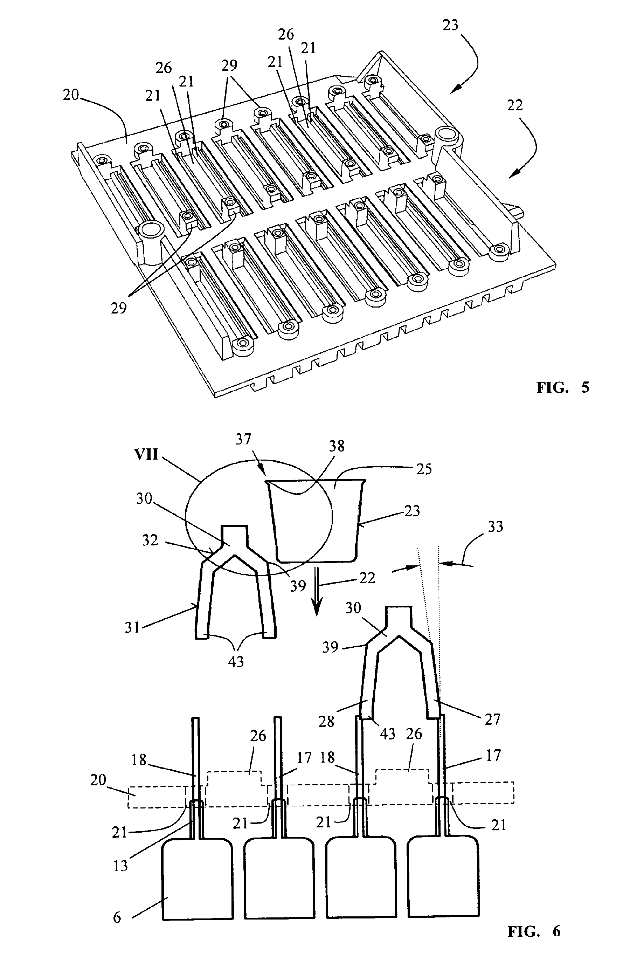

Wie den Fig. 4 und 6 zu entnehmen, liegt die äußere Seitenfläche 31 des Temperierelementes 30 sowie eine zur Seitenfläche 31 abgewinkelt liegende Kontaktfläche 32 unter einem Winkel 33 bzw. 34 zur Längsmittelebene 35 des Temperierelementes 30. Der Winkel 34 der Kontaktfläche 32 zur Längsmittelebene 35 beträgt bevorzugt 30° bis 60°, insbesondere 45°. Im gezeigten Ausführungsbeispiel ist der Winkel 34 mit 45° dargestellt.

Die Seitenfläche 31 des Temperierelementes 30 liegt unter einem Winkel 33 von etwa 2° bis 10°, insbesondere 5° zur Längsmittelebene 35. Zwischen der Kontaktfläche 32 und der Seitenfläche 31 ist ein Winkel 36 eingeschlossen, der kleiner als 180° und größer als 90° ist. Im gezeigten Ausführungsbeispiel ist der Winkel 36 mit 140° dargestellt.

Das bevorzugt aus einem isolierenden Material, z. B. Kunststoff gefertigte Druckstück 25 wird in Montagerichtung 22 zwischen die Ableiter 17 und 18 eingeschoben und an der Bodenplatte 20 verschraubt. Hierzu weist die Bodenplatte 20 Schraubdome 29 auf, die jeweils an den Längsenden des Druckstücks 25 vorgesehen sind.

Die Druckfläche 23 des Druckstücks 25 weist an dem in der Montagerichtung 22 hinten liegenden Längsrand 37 eine ausgebildete Abbiegekante 38 auf, die in Montagestellung - vgl. Fig. 4 - auf Höhe der Stoßkante 39 liegt, an der die Seitenfläche 31 und die Kontaktfläche 32 winklig aneinanderstoßen.

Mittels des keilförmigen Druckstücks 25 werden die ebenen, geradlinig verlaufenden Ableiter an die zur Längsmittelebene 35 bzw. zur Vertikalebene des Temperierelementes 30 winklig verlaufende Seitenfläche 31 und Kontaktfläche 32 angedrückt. Dabei entsteht eine erste Knicklinie 42 des Ableiters 17 bzw. 18 im Bereich des Fußes 43 eines Temperierelementes und der winklig dazu liegenden Seitenfläche 31. Eine zweite Knicklinie 44 im Ableiter 17 bzw. 18 ergibt sich auf Höhe der Stoßkante 39 des Temperierelementes 30 und wird durch die Abbiegekante 38 des Druckstücks 25 erzwungen.

Der an dem wärmeleitenden Temperierelement 30 angepresste Ableiter 17 bzw. 18 ist über die Knicklinien 42 und 44 in zwei Abschnitte aufgeteilt. Die Knicklinien 42 und 44 verlaufen in Längsrichtung des Temperierelementes 30 bevorzugt parallel zu dessen Längsachse 24. Dadurch ist die Gesamtfläche des Ableiters 17 bzw. 18 in einen ersten, wärmeübertragenden Flächenabschnitt 45 und einen zweiten, elektrischen Kontaktabschnitt 46 aufgeteilt. Der wärmeübertragende Flächenabschnitt 45 schließt an die Siegelnaht 13 an und liegt - unter der Druckkraft des keilförmigen Druckstücks 25 - wärmeübertragend auf der Seitenfläche 31 des Temperierelementes 30 auf, wobei die Seitenfläche 31 vorzugsweise größer als der wärmeübertragende Flächenabschnitt 45 ist. Es kann zweckmäßig sein, zwischen dem wärmeübetragenden Flächenabschnitt 45 und der Seitenfläche 31 eine Wärmeleitpaste anzuordnen, um den Wärmeübergang bei geringem Übergangswiderstand zu begünstigen.

Der zum wärmeübetragenden Flächenabschnitt 31 des Ableiters 17, 18 weiter abgewinkelte, elektrische Kontaktabschnitt 46 liegt auf der Kontaktfläche 32 auf, wobei eine leichte Anlage durch das Druckstück 25 erzwungen wird. Die Kontaktfläche 32 ist dabei geringfügig größer als der elektrische Kontaktabschnitt 46 ausgebildet. Um eine gute elektrische Kontaktierung zu gewährleisten, wird der elektrische Kontaktabschnitt 46 z. B. mittels eines Schweißrades oder einer Sonotrode 47 auf der Kontaktfläche 32 festgeschweißt. Das Widerlager 48 der Schweißanordnung kann in den Längskanal 21 des Temperierelementes 30 eintauchen, so dass im Bereich der Kontaktfläche 32 eine gut ausgebildete stoffschlüssige Verbindung erzielt ist. Dadurch ist der Kontaktabschnitt 46 eines Ableiters 17, 18 mechanisch fest auf der Kontaktfläche 32 des Temperierelementes 30 fixiert. Werden die an einem Temperierelement 30 auf dessen Kontaktflächen 32 aufliegenden Kontaktabschnitte 46 auf diese Weise mechanisch fest mit dem Temperierelement 30 verbunden, bildet das Temperierelement 30 eine Kontaktbrücke zwischen den Kontaktabschnitten 46 der anliegenden Ableiter 17 und 18. Der Grundkörper des Temperierelementes 30 ist daher aus einem elektrisch gut leitenden, wärmeleitenden Material gebildet. Das Temperierelement 30 besteht bevorzugt aus Aluminium, insbesondere aus einem Profilkörper aus Aluminium, z. B. einem Stranggussprofil oder dgl..

Die ausgebildete Schweißnaht 49 erstreckt sich im Wesentlichen über die gesamte Breite B eines Kontaktabschnitts 46, wodurch eine hochstromfeste, mechanisch stabile elektrische Verbindung geschaffen ist.

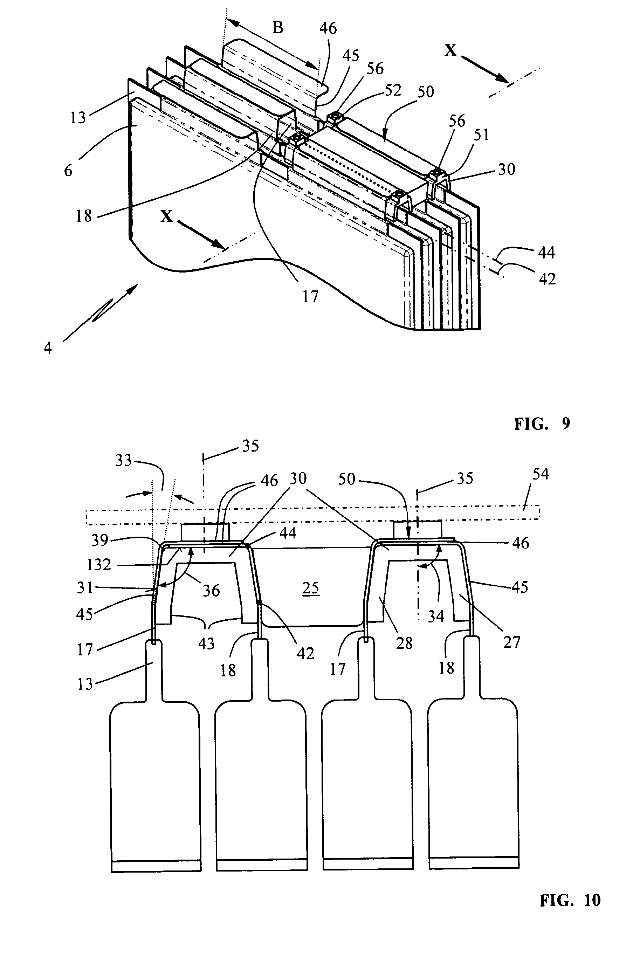

In den Fig. 9 bis 12 ist ein weiteres Ausführungsbeispiel der Erfindung dargestellt. Der Einfachheit halber sind gleiche Teile mit gleichen Bezugszeichen des ersten Ausführungsbeispiels versehen.

Im Unterschied zum ersten Ausführungsbeispiel ist die Kontaktfläche 32 des Temperierelementes 30 zu dessen Längsmittelebene 35 etwa rechtwinklig abgewinkelt. Die Kontaktfläche der einen Seitenwand 28 und die Kontaktfläche der anderen Seitenwand 27 bilden so eine gemeinsame Anlagefläche 132, welche ein Dach des Temperierelementes 30 darstellt.

Der Kontaktabschnitt 46 des Ableiters 17 bzw. 18 liegt etwa in einem rechten Winkel 34 zur Längsmittelebene 35, wobei jeder Kontaktbereichabschnitt 46 in der Größe etwa der Größe der Anlagefläche 132 des Temperierelementes 30 entspricht. Die Kontaktabschnitte 46 der einem Temperierelement 30 zugeordneten Ableiter 17 und 18 überlappen einander und sind im Überlappungsbereich 50 mechanisch miteinander befestigt. Dabei liegen die Kontaktabschnitte 46 - wie Fig. 9 zeigt - in Längsrichtung des Temperierelementes 30 an einem Anschlag 51 bzw. 52 an bzw. sind durch einen Anschlag 51 bzw. 52 an dem Ende des Temperierelementes 30 in dessen Längsrichtung formschlüssig gesichert. Im Ausführungsbeispiel liegen die überlappenden Kontaktabschnitte 46 zwischen den Endanschlägen 51 und 52 des Temperierelementes 30.

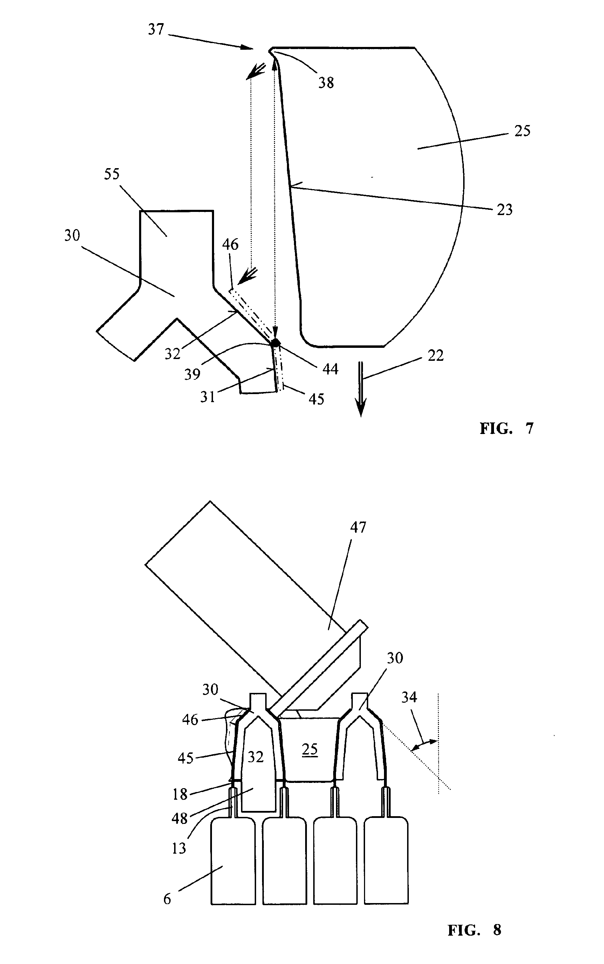

Der wäremübertragende Flächenabschnitt 45 ist durch das Druckstück 25 entsprechend dem Ausführungsbeispiel der Fig. 3 bis 8 an die Seitenfläche 31 des Temperierelementes 30 angedrückt. Für einen verbesserten Wärmeübergang kann eine Wärmeleitpaste dazwischen vorgesehen sein.

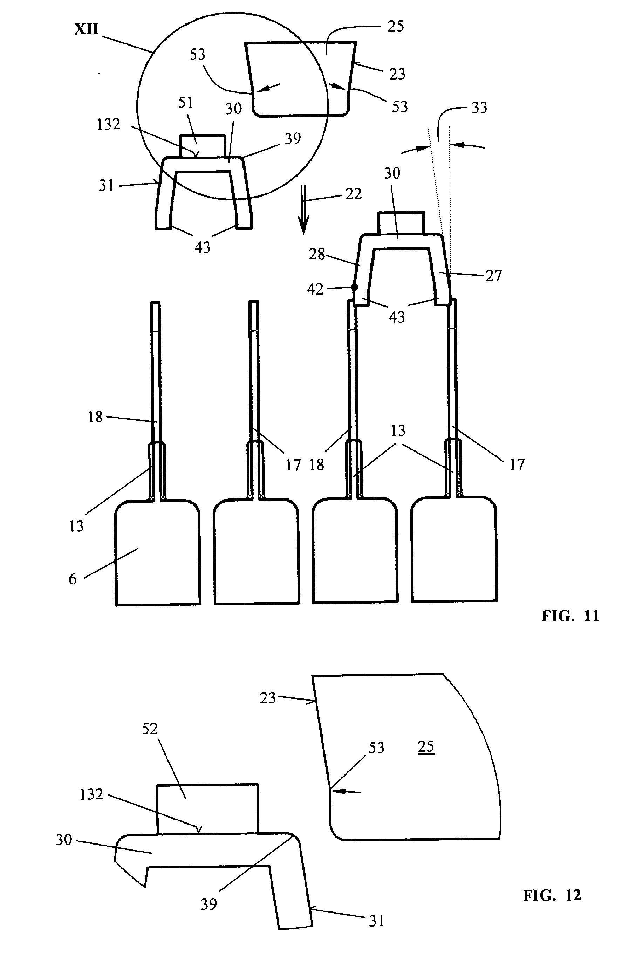

Die überlappenden Kontaktabschnitte 46 stehen in bevorzugter Ausführungsform ausschließlich untereinander in elektrischer Verbindung und liegen auf der Kontaktfläche 132 des Temperierelementes 30 lediglich auf. Das Temperierelement 30 dient im Ausführungsbeispiel nach den Fig. 9 und 12 somit ausschließlich als Wärmeableiter; eine elektrische Funktion hat das Temperierelement 30 im Ausführungsbeispiel nach den Fig. 9 bis 12 nicht. Da die Kontaktabschnitte 46 untereinander elektrisch verbunden sind, kann die Anlagefläche 132 als weitere, wärmeübertragende Fläche ausgebildet sein. Das Temperierelement dient somit einzig der Wärmeabfuhr bzw. -zufuhr und kann auch durch eine Heatpipe oder dgl. Element gebildet sein.

Zur Montage wird entsprechend der Beschreibung und der Darstellung in Fig. 6 das Temperierelement 30 zwischen zwei Ableiter 17, 18 eingeschoben (Fig. 11) und zwischen zwei Temperierelementen 30 mit den anliegenden Ableitern das keilförmige Druckstück 25 eingesetzt. Im Fußbereich weist das keilförmige Druckstück eine Biegekante 53 auf, die ein Abwinkeln des Ableiters zur Anlage des wärmeübertragenden Flächenabschnitts 45 auf der Seitenfläche 31 des Temperierelementes 30 erzwingt. Dadurch ergibt sich im Fußbereich eines Temperierelementes eine Knicklinie 42. Das Abwinkeln des elektrischen Kontaktabschnitts 46 über die Kontaktfläche 132 erfolgt mechanisch mittels Werkzeug, Fertigungsmaschinen oder dgl..

Es kann zweckmäßig sein, die Kontaktabschnitte 46 der Ableiter 17, 18 im Anlieferungszustand etwa rechtwinklig abgebogen auszubilden.

Sowohl im Ausführungsbeispiel nach den Fig. 4 bis 8 als auch in dem Ausführungsbeispiel nach den Fig. 9 bis 12 weisen die Temperierelemente Rippen 55, Abstandshalter 51, 52 oder dgl. Erhebungen auf, welche zur Montage einer Platine 54 für die bei Lithium-Ionen Zellen notwendigen Schutz- und Überwachungsschaltungen dient. Dabei können in den Rippen 55 oder den Anschlägen 51 oder 52 Aufnahmeöffnungen 56 in Form von Sacklöchern oder dgl. ausgebildet sein, in die z. B. ein Thermoelement montiert ist. Das Thermoelement gibt die örtliche Temperatur des Temperierelementes 30 an die Schutz- und Überwachungsschaltung auf der Platine 54 weiter, so dass auf einfache Weise eine Temperaturüberwachung in den Akkublock 1 integriert werden kann.

Als Schweißverfahren für eine stoffschlüssige Verbindung ist vorteilhaft das Ultraschallschweißen anwendbar. Auch können Reibschweißen, Rührreibschweißen, Laserschweißen oder dgl. Schweißverfahren vorteilhaft sein.

Eine weitere vorteilhafte Art der stoffschlüssigen Verbindung ist Löten. Hier ist insbesondere das Laserlöten hervorzuheben, welches als Verfahren zum Fügen von Werkstoffen erprobt ist. Im Vergleich zu anderen Lötverfahren zeichnet es sich durch eine sehr konzentrierte und damit geringe Energiebelastung des Werkstücks aus, wodurch sich sehr verzugsarme Lötverbindungen herstellen lassen. Durch Aufschmelzen des Lots wird eine flüssige Phase erzeugt, welche in die zu fügende Stelle eingebracht wird. Im Ausführungsbeispiel wird das Lot entweder zwischen einen Kontaktabschnitt 46 und der Kontaktfläche 32 des Temperierelementes 30 oder zwischen die Kontaktabschnitte 46 der Ableiter 17, 18 im Überlappungsbereich 50 eingebracht und aufgeschmolzen. Nach Erkalten erhält der Verbund seine Festigkeit durch Diffusion und Adhäsion des Lotes mit dem Material der Ableiter.

## Patentansprüche

1. Akkupack, bestehend aus einer Mehrzahl einzelner Akkuzellen (5), insbesondere Akkuflachzellen (6), die jeweils einen Kathodenableiter (17) und einen Anodenableiter (18) aufweisen, wobei je zwei Ableiter (17, 18) benachbarter Akkuzellen (5, 6) elektrisch leitend miteinander verbunden sind, wobei die Ableiter (17, 18) an einem wärmeleitenden Temperierelement (30) anliegen,
**dadurch gekennzeichnet, dass** die Fläche des Ableiters (17, 18) in einen ersten, Wärme übertragenden Flächenabschnitt (45) und einen zweiten, elektrischen Kontaktabschnitt (46) aufgeteilt ist, und der Wärme übertragende Flächenabschnitt (45) des Ableiters (17, 18) über ein Druckstück (25) in Wärme übertragender Verbindung an eine Seitenfläche (31) des Temperierelementes (30) angedrückt ist, und der Kontaktabschnitt (46) des einen Ableiters (17) mit dem Kontaktabschnitt (46) des anderen Ableiters (18) elektrisch verbunden ist.

2. Akkupack nach Anspruch 1,
**dadurch gekennzeichnet, dass** der Wärme übertragende Flächenabschnitt (45) und der elektrische Kontaktabschnitt (46) längs einer Knicklinie (44) zueinander abgewinkelt sind, wobei sich die Knicklinie (44) vorzugsweise in Längsrichtung des Temperierelementes (30) erstreckt.

3. Akkupack nach Anspruch 1 oder 2,
**dadurch gekennzeichnet, dass** die Kontaktabschnitte (46) über das elektrisch leitende Temperierelement (30) als Kontaktbrücke miteinander elektrisch verbunden sind.

4. Akkupack nach einem der Ansprüche 1 bis 3,
**dadurch gekennzeichnet, dass** der elektrische Kontaktabschnitt (46) eines Ableiters (17, 18) auf einer Kontaktfläche (32) des Temperierelementes (30) mechanisch befestigt ist.

5. Akkupack nach einem der Ansprüche 1 bis 3,
**dadurch gekennzeichnet, dass** die Kontaktabschnitte (46) der einem Temperierelement (30) zugeordneten Ableiter (17, 18) mechanisch aneinander befestigt sind.

6. Akkupack nach Anspruch 5,
**dadurch gekennzeichnet, dass** die Kontaktabschnitte (46) in einem Überlappungsbereich (50) einander überlappen.

7. Akkupack nach einem der Ansprüche 4 bis 6,
**dadurch gekennzeichnet, dass** die mechanische Befestigung durch eine stoffschlüssige Verbindung hergestellt ist.

8. Akkupack nach Anspruch 7,
**dadurch gekennzeichnet, dass** die stoffschlüssige Verbindung durch Laserlöten hergestellt ist.

9. Akkupack nach Anspruch 7,
**dadurch gekennzeichnet, dass** die stoffschlüssige Verbindung eine Schweißverbindung ist.

10. Akkupack nach Anspruch 9,
**dadurch gekennzeichnet, dass** eine Schweißnaht (49) der Schweißverbindung in Längsrichtung des Temperierelementes (30) über im Wesentlichen die gesamte Breite (B) des Kontaktabschnittes (46) des Ableiters (17, 18) verläuft.

11. Akkupack nach einem der Ansprüche 1 bis 10,
**dadurch gekennzeichnet, dass** der Kontaktabschnitt (46) eines Ableiters (17, 18) in Längsrichtung des Temperierelementes (30) durch einen Anschlag (51, 52) des Temperierelementes (30) formschlüssig gesichert ist.

12. Akkupack nach einem der Ansprüche 1 bis 11,
**dadurch gekennzeichnet, dass** die elektrische Kontaktfläche (46) eines Temperierelementes (30) unter einem Winkel (34) von etwa 30° bis 60° zur Längsmittelebene (35) des Temperierelementes (30) angeordnet ist, insbesondere unter einem Winkel von 45°.

13. Akkupack nach einem der Ansprüche 1 bis 12,
**dadurch gekennzeichnet, dass** der Wärme übertragende Flächenabschnitt (45) des Ableiters (30) unter einem Winkel (33) zur Längsmittelebene (35) an einer Wärme übertragenden Seitenfläche (31) des Temperierelementes (30) anliegt.

14. Akkupack nach einem der Ansprüche 1 bis 13,
**dadurch gekennzeichnet, dass** die Seitenfläche (31) des Temperierelementes (30) und dessen Kontaktfläche (32) einen Winkel (36) von weniger als 180° und mehr als 90° miteinander einschließen.

15. Akkupack nach einem der Ansprüche 1 bis 14,
**dadurch gekennzeichnet, dass** zwischen dem Wärme übertragenden Flächenabschnitt (45) und der Seitenfläche (31) des Temperierelementes (30) eine Wärmeleitpaste eingebracht ist.

16. Akkupack nach einem der Ansprüche 1 bis 15,
**dadurch gekennzeichnet, dass** das Druckstück (25) die Knicklinie (42, 44) des Ableiters (17, 18) überdeckt.

17. Akkupack nach Anspruch 16,
**dadurch gekennzeichnet, dass** an einem Längsrand (37) des Druckstücks (25) eine Abbiegekante (38) ausgebildet ist.

18. Akkupack nach Anspruch 16 oder 17,
**dadurch gekennzeichnet, dass** der ebene Ableiter (17, 18) durch Einwirken des Druckstücks (25) in einen Wärme übertragenden Flächenabschnitt (45) und einen elektrischen Kontaktabschnitt (46) abgewinkelt ist.

19. Akkupack nach einem der Ansprüche 1 bis 18,
**dadurch gekennzeichnet, dass** das Temperierelement (30) aus einem Aluminium besteht, vorzugsweise ein Profilkörper oder ein Stranggussprofil ist.

## Claims

1. Battery pack, comprising a plurality of battery cells (5), in particular flat battery cells (6), each of which has a cathode arrester (17) and an anode arrester (18), wherein in each case two arresters (17, 18) of adjacent battery cells (5, 6) are connected to one another in an electrically conductive way, the arresters (17, 18) bearing against a heat-conducting tempering element (30),
**characterised in that** the surface of the arrester (17, 18) is divided into a first, heat-transferring, surface section (45) and a second, electric, contact section (46), and **in that** the heat-transferring surface section (45) of the arrester (17, 18) is pressed against a side surface (31) of the tempering element (30) in a heat-transferring connection via a pressure pad (25) and the contact section (46) of the one arrester (17) is electrically connected to the contact section (46) of the other arrester (18).

2. Battery pack according to claim 1,
**characterised in that** the heat-transferring surface section (45) and the electric contact section (46) are angled relative to one another along a folding line (44), the folding line (44) preferably extending in the longitudinal direction of the tempering element (30).

3. Battery pack according to claim 1 or 2,
**characterised in that** the contact sections (46) are electrically connected to one another as a contact bridge via the electrically conductive tempering element (30).

4. Battery pack according to any of claims 1 to 3,
**characterised in that** the electric contact section (46) of an arrester (17, 18) is mechanically secured to a contact surface (32) of the tempering element (30).

5. Battery pack according to any of claims 1 to 3,
**characterised in that** the contact sections (46) of the arresters (17, 18) assigned to a tempering element (30) are mechanically secured to one another.

6. Battery pack according to claim 5,
**characterised in that** the contact sections (46) overlap one another in an overlapping region (50).

7. Battery pack according to any of claims 4 to 6,
**characterised in that** the parts are mechanically secured by means of adhesive force.

8. Battery pack according to claim 7,
**characterised in that** the connection by adhesive force is established by laser soldering.

9. Battery pack according to claim 7,
**characterised in that** the connection by adhesive force is a welded joint.

10. Battery pack according to claim 9,
**characterised in that** a seam (49) of the welded joint extends in the longitudinal direction of the tempering element (30) substantially across the entire width (B) of the contact section (46) of the arrester (17, 18).

11. Battery pack according to any of claims 1 to 10,
**characterised in that** the contact section (46) of an arrester (17, 18) is positively secured in the longitudinal direction of the tempering element (30) by a stop (51, 52) of the tempering element (30).

12. Battery pack according to any of claims 1 to 11,
**characterised in that** the electric contact surface (46) of a tempering element (30) is arranged at an angle (34) of approximately 30 degrees to 60 degrees, in particular at an angle of 45 degrees, relative to the longitudinal central plane (35) of the tempering element (30).

13. Battery pack according to any of claims 1 to 12,
**characterised in that** the heat-transferring surface section (45) of the arrester (30) bears against a heat-transferring side surface (31) of the tempering element (30) at an angle (33) relative to the longitudinal central plane (35).

14. Battery pack according to any of claims 1 to 13,
**characterised in that** the side surface (31) of the tempering element (30) and its contact surface (32) enclose an angle (36) of less than 180 degrees and more than 90 degrees.

15. Battery pack according to any of claims 1 to 14,
**characterised in that** a thermal compound is installed between the heat-transferring surface section (45) and the side surface (31) of the tempering element (30).

16. Battery pack according to any of claims 1 to 15,
**characterised in that** the pressure pad (25) covers the folding line (42, 44) of the arrester (17, 18).

17. Battery pack according to claim 16,
**characterised in that** a bending edge (38) is formed at a longitudinal edge (37) of the pressure pad (25).

18. Battery pack according to claim 16 or 17,
**characterised in that** the flat arrester (17, 18) is angled into a heat-transferring surface section (45) and an electric contact section (46) by the action of the pressure pad (25).

19. Battery pack according to any of claims 1 to 18,
**characterised in that** the tempering element (30) consists of an aluminium material, being preferably a profiled body or an extruded profile.

## Revendications

1. Batterie composée de plusieurs éléments accumulateurs individuels (5), en particulier des éléments accumulateurs plats (6), qui comportent chacun un conducteur cathodique (17) et un conducteur anodique (18), étant précisé que deux conducteurs (17, 18) d'éléments (5, 6) voisins sont reliés entre eux de manière conductrice d'électricité, et que les conducteurs (17, 18) sont appliqués contre un élément de thermorégulation (30) conducteur de chaleur,
**caractérisée en ce que** la surface du conducteur (17, 18) est divisée en une première partie de surface à transmission de chaleur (45) et une seconde partie de contact électrique (46), et la partie de surface à transmission de chaleur (45) du conducteur (17, 18) est pressée contre une surface latérale (31) de l'élément de thermorégulation (30), par l'intermédiaire d'une pièce de pression (25) et avec une transmission de chaleur, et la partie de contact (46) d'un conducteur (17) est reliée électriquement à la partie de contact (46) de l'autre conducteur (18).

2. Batterie selon la revendication 1,
**caractérisée en ce que** la partie de surface à transmission de chaleur (45) et la partie de contact électrique (46) sont coudées l'une par rapport à l'autre le long d'une ligne de brisure (44), étant précisé que la ligne de brisure (44) s'étend de préférence dans le sens longitudinal de l'élément de thermorégulation (30).

3. Batterie selon la revendication 1 ou 2,
**caractérisée en ce que** les parties de contact (46) sont reliées électriquement entre elles par l'intermédiaire de l'élément de thermorégulation (30) conducteur d'électricité, comme pont de contact.

4. Batterie selon l'une des revendications 1 à 3,
**caractérisée en ce que** la partie de contact électrique (46) d'un conducteur (17, 18) est fixée mécaniquement sur une surface de contact (32) de l'élément de thermorégulation (30).

5. Batterie selon l'une des revendications 1 à 3,
**caractérisée en ce que** les parties de contact (46) des conducteurs (17, 18) associés à un élément de thermorégulation (30) sont fixées mécaniquement l'une à l'autre.

6. Batterie selon la revendication 5,
**caractérisée en ce que** les parties de contact (46) se recouvrent dans une zone de recouvrement (50).

7. Batterie selon l'une des revendications 4 à 6,
**caractérisée en ce que** la fixation mécanique est réalisée par une liaison venue de matière.

8. Batterie selon la revendication 7,
**caractérisée en ce que** la liaison venue de matière est réalisée par brasage au laser.

9. Batterie selon la revendication 7,
**caractérisée en ce que** la liaison venue de matière est une liaison soudée.

10. Batterie selon la revendication 9,
**caractérisée en ce qu'**un joint (49) de la liaison soudée s'étend dans le sens longitudinal de l'élément de thermorégulation (30) pratiquement sur toute la largeur (B) de la partie de contact (46) du conducteur (17, 18).

11. Batterie selon l'une des revendications 1 à 10,
**caractérisée en ce que** la partie de contact (46) d'un conducteur (17, 18) est bloquée par complémentarité de forme dans le sens longitudinal de l'élément de thermorégulation (30) par une butée (51, 52) de ce dernier.

12. Batterie selon l'une des revendications 1 à 11,
**caractérisée en ce que** la surface de contact électrique (46) d'un élément de thermorégulation (30) est disposée suivant un angle (34) d'environ 30° à 60° par rapport au plan longitudinal médian (35) de l'élément de thermorégulation (30), en particulier suivant un angle de 45°.

13. Batterie selon l'une des revendications 1 à 12,
**caractérisée en ce que** la partie de surface à transmission de chaleur (45) du conducteur (30) est appliquée contre une surface latérale à transmission de chaleur (31) de l'élément de thermorégulation (30) suivant un angle (33) par rapport au plan longitudinal médian (35).

14. Batterie selon l'une des revendications 1 à 13,
**caractérisée en ce que** la surface latérale (31) de l'élément de thermorégulation (30) et la surface de contact (32) de celui-ci forment un angle (36) de moins de 180° et de plus de 90°.

15. Batterie selon l'une des revendications 1 à 14,
**caractérisée en ce qu'**une pâte conductrice de chaleur est posée entre la partie de surface à transmission de chaleur (45) et la surface latérale (31) de l'élément de thermorégulation (30).

16. Batterie selon l'une des revendications 1 à 15,
**caractérisée en ce que** la pièce de pression (25) couvre la ligne de brisure (42, 44) du conducteur (17, 18).

17. Batterie selon la revendication 16,
**caractérisée en ce qu'**une arête repliée (38) est formée sur un bord longitudinal (37) de la pièce de pression (25).

18. Batterie selon la revendication 16 ou 17,
**caractérisée en ce que** le conducteur plat (17, 18) est coudé sous l'action de la pièce de pression (25) pour former une partie de surface à transmission de chaleur (45) et une partie de contact électrique (46).

19. Batterie selon l'une des revendications 1 à 18,
**caractérisée en ce que** l'élément de thermorégulation (30) se compose d'un aluminium, et consiste de préférence en un corps profilé ou un profilé extrudé.
